# FASCICULE DE BREVET EUROPEEN

(11) **EP 2 626 190 B1**
(45) Date de publication et mention de la délivrance du brevet: **23.09.2020**
(21) Numéro de dépôt: 13153982.7
(22) Date de dépôt: 05.02.2013
(51) Int. Cl.: B29C 49/42, B29C 49/48

(54) **DISPOSITIFS DE FORMAGE DE RECIPIENTS**
VORRICHTUNGEN ZUR HERSTELLUNG VON BEHÄLTERN
DEVICES FOR MANUFACTURING CONTAINERS

(30) Priorité: 09.02.2012 FR 1251230
(43) Date de publication de la demande: 14.08.2013
(73) Titulaire: SIDEL PARTICIPATIONS, 76930 Octeville-sur-Mer (FR)
(72) Inventeur: Duclos, Yves-Alban, 76930 Octeville sur Mer (FR); Cardine, Denis, 76930 Octeville sur Mer (FR)
(74) Mandataire: Grassin d'Alphonse, Emmanuel Jean Marie

(56) Documents cités:
- EP-A1- 1 510 325
- EP-A2- 1 163 996
- EP-A2- 2 218 569
- DE-A1- 2 256 679
- GB-A- 1 200 917
- JP-A- 8 281 780

## Description

L'invention concerne un dispositif pour le boxage par un fond de moule d'une embase d'un récipient au cours du façonnage.

L'invention concerne plus particulièrement un dispositif pour réaliser une opération, dite de boxage, d'une embase d'un récipient avec un fond de moule, lors du façonnage du récipient par étirage-soufflage d'une préforme comportant au moins une opération de soufflage par injection à l'intérieur de la préforme d'un fluide jusqu'à une pression de soufflage, ledit fond de moule étant apte à être déplacé sélectivement, entre au moins une position initiale et une position finale de boxage déterminant une course axiale de boxage, sous l'action de moyens d'actionnement comportant au moins un vérin qui est destiné à être alimenté en fluide sous pression.

On connaît dans l'état de la technique de tels dispositifs pour réaliser une opération dite "de boxage" de l'embase d'un récipient en matière thermoplastique, tel qu'en particulier une bouteille.

Le récipient est obtenu à partir d'une préforme chaude qui est généralement mise en volume par soufflage ou par étirage-soufflage au moyen d'au moins un fluide sous pression, formé usuellement par de l'air.

On rappelle qu'une telle préforme est par exemple obtenue par injection de la matière thermoplastique dans un moule et présente un col ayant sa forme définitive, c'est-à-dire identique à celui du récipient.

Après son moulage par injection, la préforme est généralement conditionnée thermiquement dans un four pour permettre le façonnage du récipient, lequel est obtenu par au moins une opération de soufflage ou d'étirage-soufflage consistant à injecter, par l'ouverture délimitée par le col, ledit fluide sous pression à l'intérieur du corps de la préforme.

Une telle opération de boxage est par exemple décrite dans le document FR-2.508.004 auquel on se reportera, de manière non limitative, pour de plus amples détails sur cette technique de façonnage.

EP 1 163 996 et EP 1 510 325 divulguent également des dispositifs aptes à réaliser des opérations de boxage. GB 1 200 917 décrit un dispositif apte à exercer une pression contre les demis-moules d'une station de moulage lors du soufflage d'un récipient pour éviter l'ouverture du moule.

L'opération de boxage correspond à une technique de façonnage utilisée lors de la fabrication de récipients pour lesquels des caractéristiques particulières sont recherchées, notamment en matière de rigidité structurelle de leur embase, par exemple pour certaines bouteilles plastiques fabriquées en PET (Polyéthylène Téréphtalate).

Cette technique de façonnage est notamment, mais non exclusivement, utilisée aux fins de fabrication de récipients comme de telles bouteilles qui sont destinées à être remplies "à chaud", c'est à dire remplies par un liquide à conditionner dont la température est par exemple supérieure à 60°C ou 80°C.

Cette technique est encore susceptible d'être utilisée pour réduire la quantité de matière présente dans l'embase du récipient dont on recherche à alléger le poids afin d'en réduire le coût et/ou encore pour des raisons esthétiques.

La technique du boxage consiste à déplacer, au cours du façonnage, la partie du moule destinée au moulage de l'embase du récipient, encore appelée "fond de moule" (ou moule du fond) et ce alors que la matière constitutive de la préforme ou du récipient (formé ou en formation) possède encore une température appropriée de déformation.

Les figures 5 à 8 du document FR-2.508.004 représentent les principales étapes de cette technique et illustrent un exemple d'une opération de boxage mise en œuvre lors du façonnage d'une bouteille en matière thermoplastique.

Par comparaison avec un moule conventionnel comportant deux demi-moules et un fond de moule séparé, le fond de moule n'est pas immobilisé axialement par les demi-moules mais il est apte à être déplacé axialement par des moyens d'actionnement entre une position initiale de retrait (position basse) et une position finale de boxage (position haute).

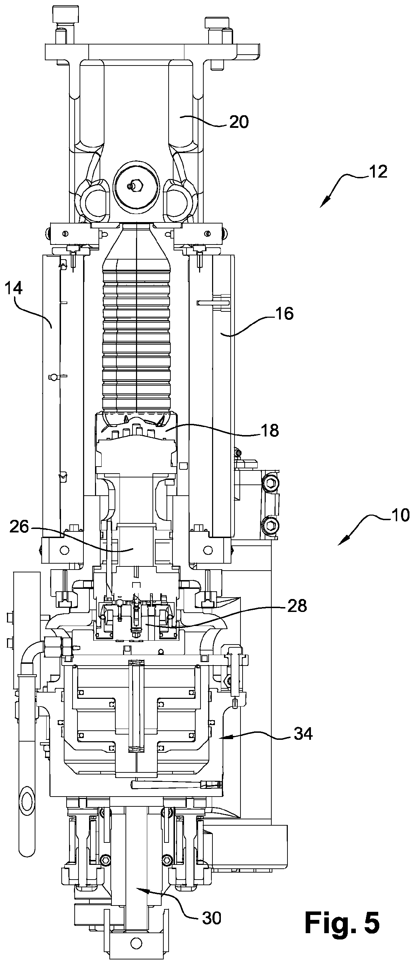

Sur la figure 5 illustrant une première étape, le fond de moule est le cas échéant déplacé pour occuper la position initiale dans laquelle il est positionné axialement en retrait de manière que la dimension axiale (hauteur) de la cavité de moulage soit supérieure à celle du corps du récipient définitif.

Une préforme, introduite dans le moule, s'étend axialement à travers une ouverture débouchant dans une cavité de moulage que délimite les deux demi-moules associés au fond de moule, lesdits demi-moules montés mobiles entre une position ouverte et une position fermée (représentée sur la figure 5).

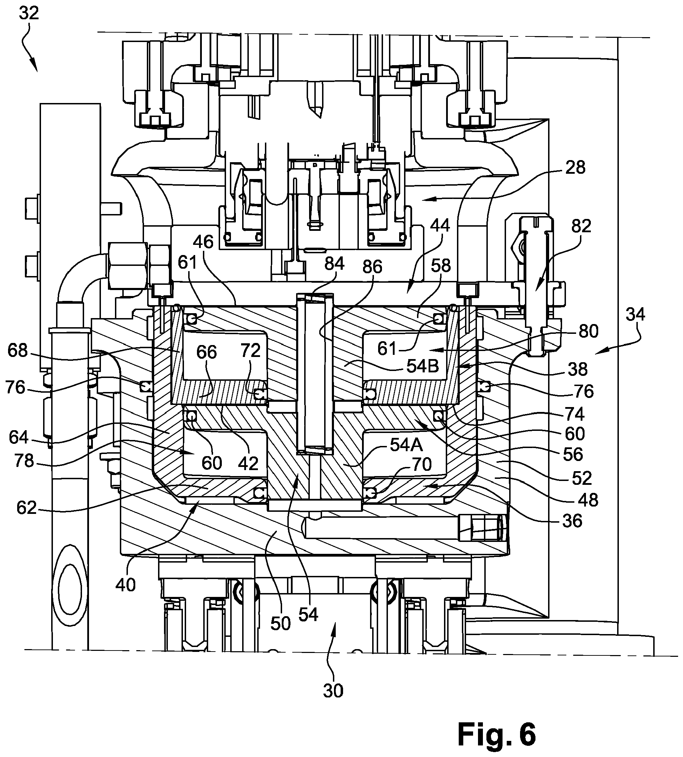

Sur la figure 6 illustrant une deuxième étape, la préforme est étirée axialement par une tige d'étirage jusqu'à atteindre sensiblement la partie sommitale du fond de moule.

Le fond de moule occupe alors encore sa position initiale, l'étirage axial de la préforme s'effectue suivant une course maximale d'étirage qui est supérieure à la hauteur du récipient (bouteille), soit avec une surcourse correspondant à la différence entre la position initiale et la position finale de boxage du fond de moule, position finale de boxage pour laquelle la dimension axiale de la cavité de moulage correspond à celle du récipient définitif.

Une telle opération d'étirage est effectuée en combinaison avec une opération de soufflage, de préférence respectivement précédées par un pré-soufflage, de manière à obtenir un étirage bi-axial, c'est-à-dire une orientation moléculaire bi-axiale de la matière grâce à laquelle la rigidité structurelle de l'embase du récipient notamment est améliorée.

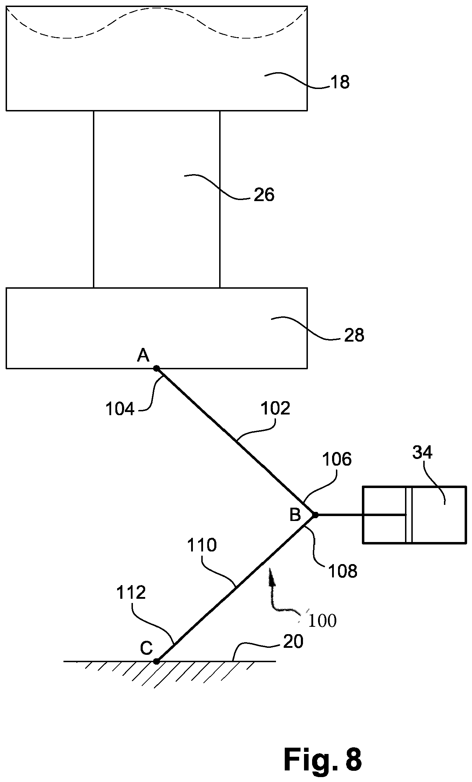

A l'issue de cette deuxième étape, l'embase du récipient n'est ici pas encore formée et la matière encore à une température de déformation, le fond de moule est alors déplacé axialement vers le haut par des moyens d'actionnement associés, de la position initiale jusqu'à la position finale de boxage illustrée à la figure 8.

Le fond de moule parcourt une course axiale de boxage au cours de laquelle ledit fond de moule va étirer la matière, la repousser axialement en direction de l'intérieur.

Toutefois, selon l'application, les techniques varient et l'opération de boxage est susceptible d'être effectuée pendant ou après la formation du récipient qui est au final mis en forme par une opération de soufflage à une pression de soufflage.

La pression finale de soufflage est susceptible d'atteindre des valeurs de l'ordre de 30 à 40 bars selon les applications, soit par conséquent des valeurs communément considérées comme des hautes pressions.

A l'exception de l'opération de boxage, le façonnage du récipient est par conséquent réalisé de manière conventionnelle par l'étirage-soufflage d'une préforme en matière thermoplastique préalablement conditionnée thermiquement à cet effet, avec une ou plusieurs étapes de soufflage consistant en l'injection à l'intérieur de la préforme d'un fluide sous pression, généralement de l'air.

Bien entendu, la description qui vient d'être faite n'est nullement limitative et diverses variantes ou perfectionnements sont susceptibles d'y être apportés pour réaliser l'opération de boxage.

Pour réaliser une telle opération de boxage de l'embase du récipient au cours de son façonnage, un dispositif du type décrit précédemment équipe chaque unité de moulage de récipients de la machine.

Un tel dispositif comporte des moyens d'actionnement qui sont destinés à déplacer sélectivement le fond de moule entre lesdites positions initiale et finale de boxage.

Le document FR-2.945.469 décrit un exemple de moyens d'actionnement d'un tel dispositif apte à réaliser une opération de boxage.

Selon ce document les moyens d'actionnement du fond de moule sont constitués par un simple vérin fonctionnant au moyen d'un fluide sous pression formé par de l'air comprimé. Le vérin pneumatique est un vérin à double effet.

Le dispositif pour réaliser le boxage selon ce document et en particulier les moyens d'actionnement formés par un tel vérin ne donnent cependant pas entière satisfaction, notamment pour les raisons détaillées ci-après.

Tout d'abord pour réaliser le boxage, le vérin doit être alimenté avec un fluide sous pression à une pression d'alimentation qui soit au moins égale à la pression de soufflage. En effet, le fond de moule applique axialement un effort de boxage sur la paroi de l'embase, lequel effort de boxage est de sens opposé à celui résultant du fluide sous pression présent à l'intérieur du récipient, ledit fond de moule devant demeurer dans la position finale de boxage jusqu'à l'achèvement du façonnage du récipient et son extraction hors du moule.

C'est la raison pour laquelle, un tel vérin de dispositif de boxage présente une consommation en air comprimé particulièrement importante.

A titre d'exemple et pour donner un ordre de grandeur, la consommation en air d'un vérin est de l'ordre de 0,2 litre à 40 bars de pression d'alimentation pour réaliser une course de boxage d'environ 20 mm sur une embase de récipient (bouteille) présentant un diamètre de 110 mm.

Par conséquent, on comprendra que compte tenu des cadences atteintes en production par une machine de soufflage de récipients et des multiples unités de moulage réparties circonférentiellement, la consommation en air comprimé soit regardée avec attention.

Dans certain cas, la taille des machines et/ou les cadences élevées atteintes sont telles qu'il est alors nécessaire de prévoir pour le vérin de boxage une source distincte d'alimentation en fluide sous pression.

Un compresseur supplémentaire est ajouté aux seules fins d'alimenter en air comprimé le vérin du dispositif de boxage. Or, un tel compresseur dédié à alimenter le vérin du dispositif induit des coûts supplémentaires.

D'une part, il y a le coût du compresseur en lui-même pour équiper chaque unité de la machine de soufflage et, d'autre part, il y a également ensuite des coûts de production du fait de la consommation importante d'énergie du compresseur pour délivrer au vérin une telle quantité d'air comprimé.

De plus, l'agencement d'au moins un compresseur supplémentaire au sein d'une machine de soufflage est parfois difficile compte tenu du manque de place.

D'une manière générale, l'on recherche encore et toujours à réduire l'ensemble des consommations de telle machine de soufflage pour le façonnage de récipients et en particulier les consommations d'air comprimé, celle du vérin du dispositif destiné à réaliser l'opération de boxage s'avérant être significative.

Le but de l'invention est donc de résoudre notamment les inconvénients précités et encore de proposer une nouvelle conception de dispositif pour réaliser l'opération de boxage qui soit avantageusement simple, fiable et surtout économique.

Dans ce but, l'invention propose un dispositif du type décrit précédemment, caractérisé en ce que les moyens d'actionnement du fond de moule comportent des moyens de démultiplication ou d'amplification de l'effort de sortie du vérin qui agit sur le fond de moule pour lui appliquer un effort de boxage.

Grâce à l'invention, ledit dispositif est apte à appliquer au fond de moule un effort de boxage avec une pression nominale d'alimentation du vérin qui est inférieure à la pression nominale requise avec un simple vérin.

Avantageusement, ledit au moins un vérin destiné à l'actionnement du fond de moule dans un dispositif selon l'invention est donc susceptible d'être alimenté en fluide sous pression avec des valeurs de pression qui, par comparaison avec les solutions antérieures selon l'état de la technique, sont des pressions moyennes, voir des basses pressions.

Grâce aux moyens de démultiplication ou d'amplification selon l'invention, la valeur de la pression d'alimentation des moyens d'actionnement correspond avantageusement au moins à la moitié de la valeur de la pression de soufflage, par exemple inférieure à 20 bars pour une pression de soufflage de 40 bars.

Le vérin du dispositif de boxage est par conséquent apte à être alimenté par une source d'air comprimé disponible délivrant seulement une moyenne ou une basse pression, tel qu'un réseau alimentant la machine de soufflage ou encore avec de l'air de soufflage recyclé.

La pression nominale d'alimentation du vérin est par exemple comprise dans une plage de valeurs de 5 à 25 bars, notamment de l'ordre de 13 bars.

Avantageusement, le compresseur supplémentaire auparavant associé au dispositif pour alimenter en fluide sous pression le vérin est supprimé, ce qui participe à la réduction du coût global de mise en œuvre de l'opération de boxage.

Le dispositif de boxage selon l'invention est économique, tout particulièrement la consommation d'air sous pression utilisé pour réaliser l'opération de boxage est considérablement réduite par rapport aux solutions connues de l'art antérieur ce qui permet d'obtenir un gain substantiel en terme de coûts.

Selon un premier mode de réalisation de l'invention les moyens d'actionnement du fond de moule comportent des moyens de démultiplication qui sont constitués par au moins un vérin multiple, dit "à étages", comportant au moins un premier piston et un deuxième piston attelés axialement pour former un équipage mobile et respectivement montés coulissant dans une première chambre d'actionnement et une deuxième chambre d'actionnement, lesdites première et deuxième chambres d'actionnement étant aptes à être alimentées par le même fluide sous pression, grâce à quoi ledit vérin multiple est apte à appliquer au fond de moule un effort de boxage associé qui résulte de la somme des sections actives d'au moins lesdits premier et deuxième pistons ;
Avantageusement, les moyens de démultiplication sont constitués par au moins un vérin multiple à trois étages comportant au moins un troisième piston qui, attelé axialement aux premier et deuxième pistons, est monté coulissant dans une troisième chambre d'actionnement apte à être alimentée par le même fluide sous pression, ledit vérin multiple étant apte à appliquer au fond de moule un effort de boxage associé qui résulte de la somme des sections actives desdits au moins premier, deuxième et troisième pistons ;
Avantageusement, lesdites chambres d'actionnement sont alimentées en fluide sous pression à une pression nominale d'alimentation qui est inférieure à la pression de soufflage ;
Avantageusement, le vérin multiple du dispositif est caractérisé par un facteur de démultiplication qui, fonction desdites sections actives des au moins premier et deuxième pistons, est supérieur ou égal au rapport de la valeur de la pression de soufflage sur la valeur de la pression nominale d'alimentation ;
Aventageusement, lesdites chambres d'actionnement sont alimentées à ladite pression nominale par un circuit d'alimentation délivrant un fluide sous pression qui est constitué, en tout ou partie, d'air de soufflage recyclé ;
Avantageusement, le vérin comporte au moins un étage à double effet comportant une chambre de rappel qui est apte à être alimentée en fluide sous pression ;
Avantageusement, le vérin multiple comporte des moyens de rappel élastique aptes à solliciter automatiquement lesdits pistons vers une position correspondant à la position finale de boxage du fond de moule ;
Selon un deuxième mode de réalisation de l'invention, les moyens d'amplification des moyens d'actionnement du fond de moule comportent au moins un levier qui, interposé entre le vérin et le fond de moule, est apte à accroître avec un effet de levier déterminé l'effort de sortie dudit au moins un vérin ; les moyens d'amplification comportent des moyens mécaniques formés par au moins deux bielles, respectivement une première bielle dont une extrémité est liée en un point d'accrochage à un support du fond de moule et dont l'autre extrémité est reliée à une extrémité d'une deuxième bielle en un point d'articulation, l'autre extrémité de la deuxième bielle étant liée à un point d'ancrage fixe, et lesdits moyens d'actionnement sont aptes à agir sur le point d'articulation desdites bielles pour provoquer le déplacement du support de fond de moule suivant la course axiale de boxage en faisant varier la longueur entre le point d'accrochage de la première bielle et le point d'accrochage de la deuxième bielle ;
Avantageusement, le dispositif comporte des moyens de renvoi aptes à transmettre, aux demi-moules associés audit fond de moule, les efforts mécaniques appliqués aux moyens d'actionnement du fond de moule lors du façonnage du récipient de manière que lesdits efforts ne soient pas repris par les moyens d'actionnement ;
Avantageusement, les moyens d'actionnement comportant le vérin sont agencés axialement en dessous d'un support du fond de moule comportant au moins une sellette.

D'autres caractéristiques et avantages de la présente invention apparaîtront à la lecture de la description détaillée qui suit pour la compréhension de laquelle on se reportera aux dessins dans lesquels :
- la figure 1 est une vue de face qui représente une unité de moulage en position ouverte équipée d'un dispositif de boxage comportant des moyens de démultiplication selon l'invention ;

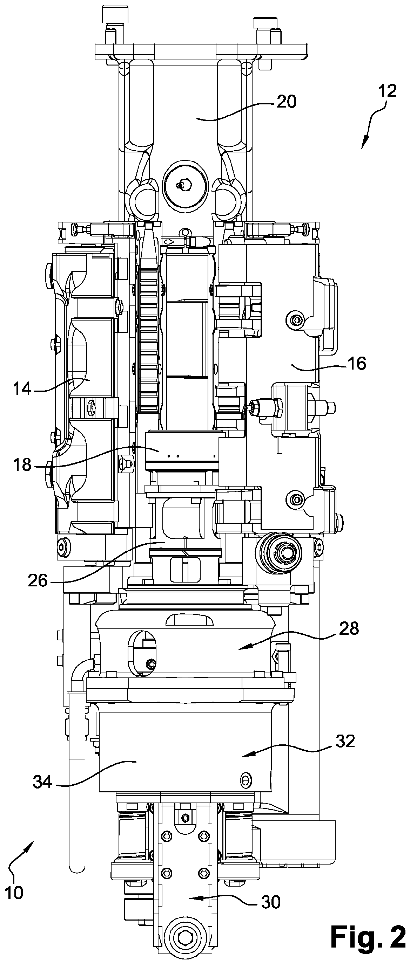

- la figure 2 est une vue de face qui représente l'unité de moulage en position ouverte et qui illustre, par comparaison avec la figure 1, le fond de moule en position finale de boxage ;
- la figure 3 est une vue de face qui représente l'unité de moulage en position fermée ;

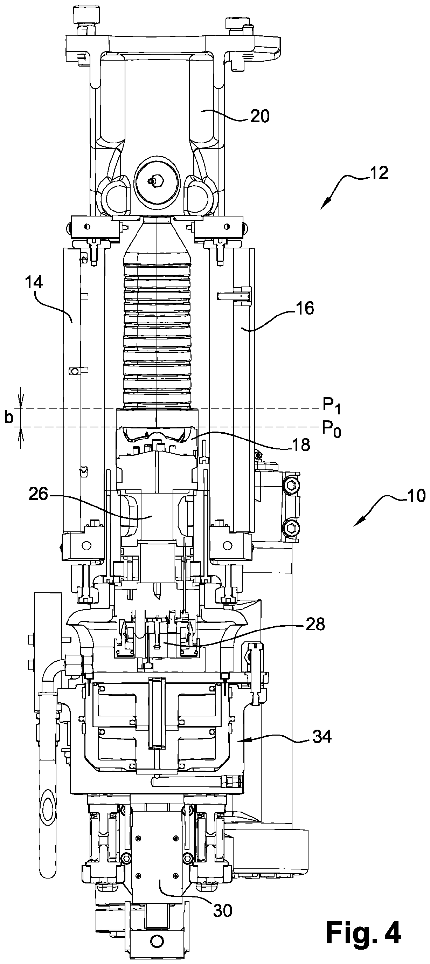

- les figures 4 et 5 sont des vues en coupe axiale de la figure 3 qui représentent respectivement le fond de moule en position initiale et en position finale de boxage et illustre pour la figure 4 la course axiale "b" de boxage ;
- les figures 6 et 7 sont des vues en coupe qui représentent en détails un vérin multiple formant des moyens d'amplification selon l'invention et qui illustrent un mode de réalisation préféré dudit vérin dans des positions correspondant respectivement auxdites positions initiale et finale de boxage du fond de moule des figures 4 et 5 ;
- la figure 8 est une vue schématique qui représente un mode de réalisation des moyens d'amplification selon l'invention.

Dans la suite de la description, on adoptera à titre non limitatif une orientation axiale selon l'axe principal du récipient et une orientation radiale qui est orthogonale à l'orientation axiale.

Les termes "supérieur" et inférieur" sont utilisés en référence à l'orientation axiale, par simple convention et sans référence aucune à la gravité terrestre.

L'invention concerne un dispositif 10 pour réaliser une opération de boxage, par un fond de moule, d'une embase d'un récipient au cours du façonnage dudit récipient.

On décrira ci-après un exemple de conception d'une unité 12 de moulage de récipients qui est plus particulièrement destinée au façonnage d'une bouteille à partir d'une préforme en matière thermoplastique.

L'unité 12 de moulage est équipée d'un dispositif 10 selon l'invention, ci-après le dispositif 10 de boxage, afin de pouvoir fabriquer une bouteille présentant une embase ayant subie une opération de boxage.

Selon l'exemple de conception représenté aux figures, l'unité 12 de moulage comporte un moule réalisé en trois parties, respectivement deux demi-moules 14 et 16 et un fond 18 de moule associé.

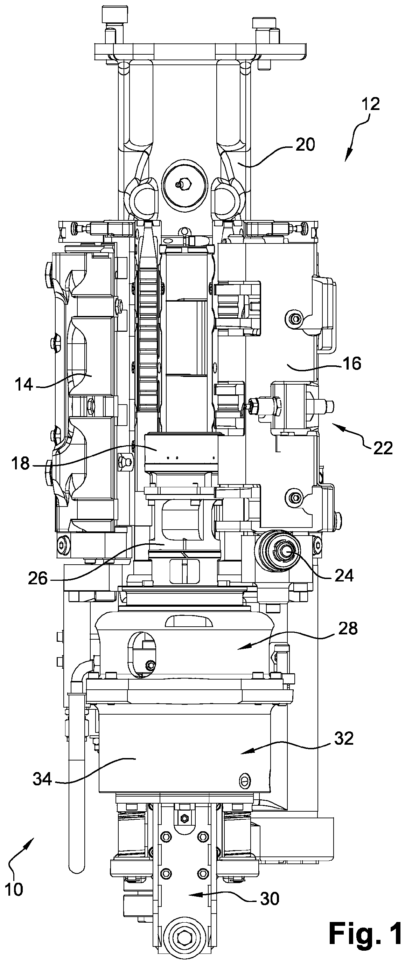

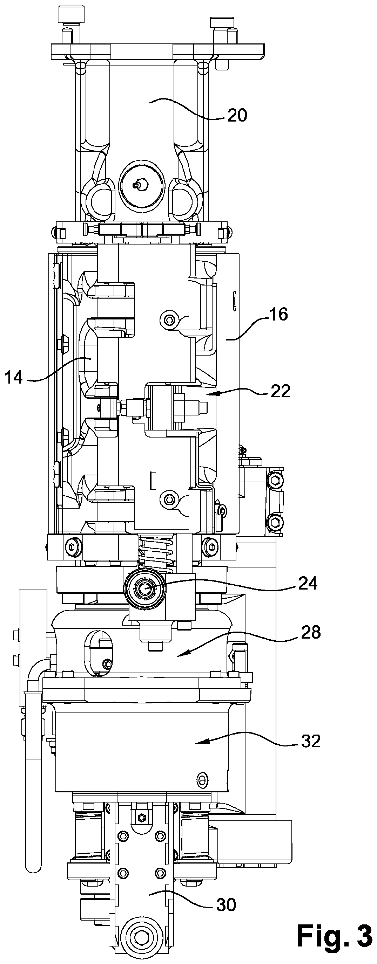

Un tel moule est encore appelé moule "en portefeuille" (ou *"book-like opening"* en anglais) car les deux demi-moules 14 et 16 sont montés pivotant autour d'un axe de rotation d'orientation axiale, respectivement entre une position ouverte (figure 1) et une position fermée (figure 3).

De préférence, les deux demi-moules sont montés mobiles en rotation et commandés en déplacement par un dispositif d'ouverture/fermeture, en variante l'un des demi-moules 14 et 16.

On se reportera par exemple aux documents FR-2.843.714 ou FR-2.653.058 pour de plus amples détails sur la réalisation et le fonctionnement d'un tel dispositif d'ouverture/fermeture d'une unité 12 de moulage.

Grâce à un tel dispositif commandant sélectivement l'ouverture ou la fermeture de l'unité 12 de moulage, le moule occupe soit ladite position ouverte dans laquelle une préforme est susceptible d'être introduite dans l'unité 12 en vue d'y être mise en volume ou encore dans laquelle le récipient façonné est susceptible d'être extrait, soit ladite position fermée dans laquelle les différentes opérations nécessaires au façonnage sont mises en œuvre suivant un cycle de fabrication déterminé.

On connaît différentes conceptions d'un tel moule pour la fabrication de récipients, tels que des bouteilles en PET.

A titre d'exemple non limitatif, on pourra se reporter au document EP-0.821.641 qui décrit une conception de moule analogue à celle du moule représenté sur les figures.

Selon cette conception, chaque demi-moule est réalisé en deux parties distinctes, respectivement une coquille comportant une partie de l'empreinte de moulage du récipient à façonner et un porte-coquille dans un logement duquel ladite coquille est destinée à être montée et fixée de manière amovible par l'intermédiaire de moyens de fixation.

Le porte-coquille est lui-même destiné à être monté et fixé par d'autres moyens de fixation à un porte-moule qui constitue la partie de support montée pivotante autour de l'axe de rotation.

L'unité 12 de moulage comporte un bâti 20 dont la partie axiale supérieure est destinée à recevoir des moyens (non représentés) de formage du récipient, ledit formage du récipient à partir d'une préforme étant notamment obtenu par soufflage ou par étirage-soufflage en utilisant de l'air sous pression.

Le document FR-2.764.544, auquel on se reportera à titre d'exemple, décrit notamment des moyens de soufflage associés à une unité 12 de moulage, de tels moyens étant encore appelés "tuyère de soufflage".

De tels moyens de formage, sont aptes à réaliser la mise en volume d'une préforme (non représentée) en matière plastique préalablement conditionnée thermiquement, généralement dans un four situé en amont qui comporte des moyens de chauffage.

La mise en volume d'une préforme par étirage-soufflage est une technique de façonnage bien connue, l'opération de soufflage comportant une ou plusieurs étapes consistant à introduire par le col, à l'intérieur de la préforme, un fluide sous pression, tel que de l'air comprimé, jusqu'à une pression Ps de soufflage tandis qu'une opération d'étirage est avantageusement également mise en œuvre au moyen d'une tige d'étirage pour étirer axialement la préforme vers le bas.

De préférence, l'unité 12 de moulage comporte un dispositif de verrouillage du moule comportant au moins des moyens 22 de verrouillage des demi-moules 14 et 16 en position fermée et un organe 24 de commande, tel qu'un galet porté par un arbre coulissant associé auxdits moyens 22 de verrouillage, pour en commander le déplacement entre une position verrouillée et une position déverrouillée.

Pour de plus amples détails sur la structure et le fonctionnement d'un tel dispositif de verrouillage, on pourra se reporter au document FR-2.646.802 décrivant un exemple de verrou pour une unité 12 de moulage.

Le moule de l'unité 12 de moulage comporte un support 26 du fond 18 de moule, ledit support 26 comportant de préférence au moins une sellette 28.

La sellette 28 est une pièce destinée à former une interface avec le fond 18 de moule et comporte différents moyens dont des moyens de verrouillage commandés et des moyens de raccordement fluidique pour assurer notamment des fonctions tels qu'une régulation de la température du fond 18 ou une assistance au décollement du fond lors du démoulage en fin de cycle.

On pourra se reporter à titre d'exemple non limitatif au document WO-2008/00938 pour de plus amples détails sur la structure et les fonctions d'une sellette 28.

L'ensemble formé par le fond 18 de moule, le support 26 comportant la sellette 28 est monté mobile axialement par rapport au bâti 20 de l'unité 12 de moulage par l'intermédiaire d'un chariot 30.

Avantageusement, le support 26 comporte encore une entretoise ou cale qui, selon le format du récipient, est interposée axialement entre le fond 18 de moule et la sellette 28.

Grâce à un jeu de cales de dimensions données qui sont respectivement associées à des fonds de moule pour le façonnage de différents types de récipients, on réalise rapidement les manipulations lors d'un changement de moule pour démarrer la fabrication d'un autre récipient.

Avantageusement, la sellette 28 demeure en place et la partie du support 26 formant cale est la seule à faire l'objet d'un démontage et/ou d'un montage lors d'un tel changement de moule.

Le chariot 30 est apte à être commandé sélectivement en déplacement par des moyens d'entraînement, respectivement entre une position basse de retrait (occupée en position ouverte du moule) et une position haute de moulage (occupée en position fermée du moule).

Pour réaliser l'opération de boxage, le fond 18 de moule est apte à être déplacé sélectivement, entre au moins une position initiale et une position finale de boxage déterminant une course axiale de boxage, sous l'action de moyens 32 d'actionnement.

Lorsque le chariot 30 occupe ladite position haute de moulage, le fond 18 de moule occupe alors sa position initiale, c'est à dire la position dans laquelle il délimite axialement vers le bas la cavité de moulage avec une hauteur supérieure à celle du récipient de manière à permettre une course maximale d'étirage.

Dans l'état de la technique, les moyens 32 d'actionnement comportent au moins un vérin 34 qui est destiné à être alimenté en fluide sous pression, lesdits moyens 32 d'actionnement du fond 18 de moule étant embarqués sur le chariot 30 mobile.

Par comparaison avec l'état de la technique décrit dans le document FR-2.945.469, les moyens 32 d'actionnement selon l'invention sont agencés axialement en dessous du support 26 du fond 18 de moule et tout particulièrement de la sellette 28.

Grâce à un tel agencement, les moyens 32 d'actionnement n'ont plus à être traversé axialement pour assurer notamment une circulation de fluides entre la sellette 28 et le fond 18 de moule, que cela soit par de l'air pour assurer une fonction de décollement ou encore un fluide caloporteur pour assurer une fonction de régulation de la température du fond 18 de moule.

Avantageusement, un tel agencement des moyens 32 d'actionnement permet également une simplification des opérations de changement de moule, lesdits moyens 32 restant montés à demeure sur le chariot 30 et le fond 18 de moule seul étant changé, avec ou sans démontage également de la sellette 28 qui peut convenir à différents fonds 18 de moule, notamment dans le cas de l'utilisation décrite précédemment d'une cale ou entretoise formant au moins une partie du support 26.

Selon un premier mode de réalisation de l'invention, les moyens 32 d'actionnement du fond 18 de moule comportent des moyens de démultiplication de l'effort de sortie du vérin 34 qui agit sur le fond 18 de moule pour lui appliquer un effort Fb de boxage.

Dans ce premier mode de réalisation, les moyens 32 d'actionnement du fond 18 de moule comportent des moyens de démultiplication qui sont constitués par au moins un vérin 34 multiple, dit vérin "à étages".

Le vérin 34 comporte au moins un premier piston 36 et un deuxième piston 38 qui sont attelés axialement pour former un équipage mobile et qui sont respectivement montés coulissant dans une première chambre 40 d'actionnement et une deuxième chambre 42 d'actionnement.

Les première et deuxième chambres 40, 42 d'actionnement sont aptes à être alimentées par le même fluide sous pression, grâce à quoi ledit vérin 34 multiple est apte à appliquer au fond 18 de moule un effort Fb de boxage associé qui résulte de la somme des sections actives d'au moins lesdits premier et deuxième pistons 36, 38.

Avantageusement, les moyens de démultiplication sont constitués dans ce premier mode de réalisation par un vérin 34 multiple (non représenté) comportant au moins deux étages.

De préférence, les moyens de démultiplication sont toutefois constitués par au moins un vérin 34 triple, c'est à dire un vérin multiple à trois étages comportant au moins un troisième piston 44.

Le troisième piston 44 est attelé axialement aux premier et deuxième pistons 36 et 38 et il est monté coulissant dans une troisième chambre 46 d'actionnement apte à être alimentée par le même fluide sous pression.

Avantageusement, un tel vérin 34 triple est apte à appliquer au fond 18 de moule un effort Fb de boxage associé qui résulte de la somme des sections actives desdits au moins premier, deuxième et troisième pistons 36, 38 et 44.

Les chambres 40, 42 et 46 d'actionnement sont alimentées par une source d'alimentation qui délivre au vérin 34 ledit fluide sous pression à une pression Pn nominale d'alimentation qui est inférieure à la pression Ps de soufflage.

La pression Pn nominale d'alimentation du vérin 34 est par exemple d'environ 13 bars lorsque la pression Ps de soufflage est de l'ordre de 40 bars. Bien entendu, la pression Pn nominale d'alimentation du vérin 34 est déterminée en fonction pour chaque application et en fonction des caractéristiques de démultiplication du vérin 34.

De plus la pression Pn nominale d'alimentation est susceptible d'être réglée à une valeur déterminée, par exemple au moyen d'un détendeur.

Le vérin 34 multiple du dispositif 10 de boxage est caractérisé par un facteur (k) de démultiplication qui est supérieur ou égal au rapport de la valeur de la pression Ps de soufflage sur la valeur de la pression Pn nominale d'alimentation. Le facteur k de démultiplication d'un vérin 34 est notamment fonction des sections actives des pistons qu'il comporte. De préférence, le facteur (k) de démultiplication est compris entre 2 et 4, par exemple sensiblement égal à 3.

Dans le cas d'un facteur (k) de démultiplication environ égal à 3, une pression Pn nominale d'alimentation de l'ordre de 13 bars permet de réaliser l'opération de boxage de l'embase d'un récipient mis en volume avec une pression finale de soufflage d'environ 40 bars.

De préférence, les chambres 40, 42 et 46 d'actionnement sont alimentées à ladite pression Pn nominale par un circuit d'alimentation (non représenté) délivrant un fluide sous pression qui est constitué, en tout ou partie, de fluide recyclé.

Avantageusement, le fluide recyclé est constitué par de l'air de soufflage qui est recyclé, après son utilisation pour l'opération de soufflage, pour alimenter au moins le vérin 34 multiple formant les moyens de démultiplication selon l'invention.

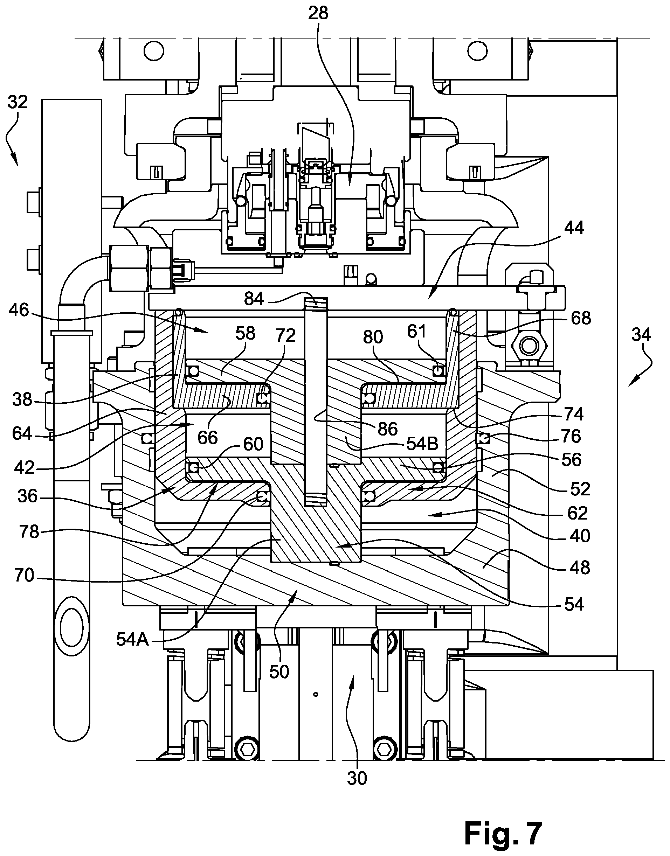

Les figures 6 et 7 représentent en détail ledit vérin 34 triple présentant des perfectionnements structurels permettant d'obtenir un vérin particulièrement compact axialement.

En effet, compte tenu de son agencement dans l'unité 12 de moulage, le vérin 34 multiple formant les moyens 32 d'actionnement doit présenter une bonne compacité générale.

Tout particulièrement l'encombrement axial est soumis à des contraintes importantes. En effet, la course axiale du vérin 34 pour appliquer au fond 18 de moule l'effort Fb de boxage a une incidence sur la course de dégagement pour l'extraction du récipient façonné. Ainsi, plus la course de boxage est importante moins la course de dégagement du fond 18 de moule peut l'être également.

Le vérin 34 triple comporte trois chambres 40, 42 et 46 d'actionnement qui peuvent être alimentées en fluide sous pression et dont chacune détermine une section active ou section efficace d'actionnement.

De préférence, les trois chambres 40, 42 et 46 d'actionnement sont alimentées simultanément en air à la pression Pn nominale d'alimentation.

Le vérin 34 comporte un corps 48 principal externe en forme générale de pot cylindrique qui est délimité axialement par un fond 50 radial inférieur, et latéralement par une jupe 52 axiale extérieure.

Le corps 48 principal comporte, en son centre, un pied 54 central d'orientation axiale qui s'étend axialement vers le haut à partir du fond 50 radial inférieur, sensiblement sur toute la hauteur axiale du corps.

Le pied 54 central comporte un premier tronçon 54A axial inférieur à l'extrémité duquel est formée une première cloison 56 radiale intermédiaire, et il comporte un deuxième tronçon 54B axial supérieur à l'extrémité duquel est formée une deuxième cloison 58 radiale intermédiaire.

Chacune des deux cloisons 56 et 58 radiales intermédiaires est munie, à sa périphérie radiale externe, d'un joint d'étanchéité respectivement référencé 60 et 61.

Le vérin 34 triple comporte respectivement un premier piston 36, un deuxième piston 38 et un troisième piston 44.

Les premier et deuxième pistons 36 et 38 présentent une forme de pot cylindrique, les pistons 36, 38 étant agencés de manière concentrique l'un par rapport à l'autre, le deuxième piston 36 étant logé radialement et axialement à l'intérieur du premier piston 36.

Le premier piston 36 est délimité axialement par un fond 62 radial inférieur et latéralement par une jupe 64 axiale extérieure, tandis que le deuxième piston 38 est délimité axialement par un fond 66 radial inférieur et latéralement par une jupe 68 axiale extérieure.

Le troisième piston 44 présente une forme de couvercle s'étendant radialement et est lié axialement en déplacement aux premier et deuxième pistons 36 et 38.

Le fond 62 radial inférieur du premier piston 36 est percé centralement pour permettre le passage du premier tronçon 54A inférieur du pied 54 le long duquel le fond 62 du premier piston 36 coulisse axialement de manière étanche.

Un joint d'étanchéité 70, de préférence porté par le fond 62 radial inférieur du premier piston 36, coopère avec la surface cylindrique externe du premier tronçon 54A inférieur du pied 54.

Le fond 66 radial inférieur du deuxième piston 38 est percé centralement pour permettre le passage du deuxième tronçon 54B supérieur du pied 54 le long duquel le fond 66 du deuxième piston 38 coulisse axialement de manière étanche.

Un joint d'étanchéité 72, de préférence porté par le fond 66 radial inférieur du deuxième piston 38, coopère avec la surface cylindrique externe du deuxième tronçon 54B supérieur du pied 54.

Les premier et deuxième pistons 36 et 38 en forme de pot étant concentriques, la jupe 64 latérale du premier piston 36 entoure circonférentiellement la jupe 68 latérale du deuxième piston 38.

Pour réaliser l'attelage entre les premier et deuxième pistons 36 et 38, la jupe 64 latérale du premier piston 36 est étagée et comporte radialement à l'intérieur un épaulement 74 contre lequel le fond 66 du deuxième piston 38 vient en appui.

La jupe 68 latérale du deuxième piston 38 est solidaire axialement de la jupe 64 latérale du premier piston 36.

L'ensemble des pistons 36, 38 et 44 sont montés coulissant axialement à l'intérieur du corps 48 principal et un joint 76 d'étanchéité est interposé entre la surface cylindrique externe de la jupe 64 latérale du premier piston 36 et la surface cylindrique interne de la jupe 52 du corps 48 principal.

De préférence, le joint 76 d'étanchéité est porté la jupe 52 latérale du corps 48 principal.

La première chambre 40 d'actionnement, avec une première section active S1, est ainsi délimitée de manière étanche entre le fond 50 radial du corps 48 principal et le fond 62 radial inférieur du premier piston 36.

La première section active S1 correspond à la section différentielle entre la section du fond 62 radial inférieur du premier piston 36 et la section du pied 54, plus précisément du tronçon inférieur 54A.

La deuxième chambre 42 d'actionnement, avec une deuxième section active S2, est ainsi délimitée axialement entre la face inférieure du fond 66 radial du deuxième piston 38 et la face supérieure de la première cloison 56 intermédiaire.

La deuxième section active S2 correspond à la section différentielle entre la section du fond 66 radial inférieur du deuxième piston 38 et la section du pied 54, plus précisément du tronçon supérieur 54B.

Ainsi, quand cette deuxième chambre 42 est alimentée en air sous pression, le fond 66 radial se comporte comme un piston monté coulissant sur lequel agit l'air sous pression pour accroître l'effort d'actionnement appliqué au fond 62 radial du premier piston 36 par l'air sous pression contenu dans la première chambre 40 d'actionnement.

Le troisième piston 44 en forme de couvercle radial est agencé à l'extrémité axiale libre de chacune des jupes 64 et 68 des pistons 36, 38 et ferme l'ensemble à son extrémité axiale supérieure.

La deuxième cloison 58 intermédiaire est située axialement entre le troisième piston 44 formant couvercle et le fond 66 du deuxième piston 38, et son joint 61 d'étanchéité coopère de manière étanche avec la surface cylindrique interne de la jupe 68 du deuxième piston 38 située radialement en vis-à-vis.

La troisième chambre 46 d'actionnement, déterminant une troisième section active S3, est ainsi délimitée entre la face radiale inférieure du troisième piston 44 et la face radiale supérieure en vis-à-vis de la deuxième cloison 58 intermédiaire.

La troisième section active S3 correspond à la section du troisième piston 44 formant couvercle.

Lorsque la troisième chambre 46 d'actionnement est alimentée en air sous pression, le couvercle 44 se comporte alors en effet comme un troisième piston sur lequel agit l'air sous pression pour accroître encore l'effort d'actionnement appliqué par le vérin 34 au fond 18 de moule.

L'effort global d'actionnement appliqué aux différents pistons 36, 38 et 44 est ainsi la résultante des efforts correspondant aux trois sections actives correspondantes aux trois chambres 40, 42 et 46 d'actionnement associées qui sont alimentées en fluide sous pression à la pression Pn nominale.

Avantageusement, le vérin 34 triple qui vient d'être décrit comporte deux chambres de rappel du piston vers sa position basse illustrée à la figure 6 et correspondant à la position initiale du fond 18 de moule.

La première chambre 78 de rappel, susceptible d'être alimentée en air sous pression, est délimitée axialement entre la face supérieure du fond 62 radial inférieur du premier piston 36 et la face radiale inférieure en vis-à-vis de la première cloison 56 intermédiaire.

De la même manière, la deuxième chambre 80 de rappel, susceptible d'être alimentée en air sous pression, est délimitée axialement par la face radiale supérieure du fond 66 du deuxième piston 38 et par la face radiale inférieure en vis-à-vis de la deuxième cloison 58 intermédiaire.

Outre sa fonction de support des première et deuxième cloisons 56, 58 intermédiaires, le pied 54 central en deux tronçons 54A, 54B permet avantageusement la réalisation de canaux ou canalisations d'alimentation des différentes chambres 40, 42 et 46 d'actionnement et/ou des chambres 78 et 80 de rappel. Certains des ces canaux d'alimentation sont notamment visibles sur la figure 6.

Le troisième piston 44 formant couvercle constitue avantageusement également une plaque par l'intermédiaire de laquelle le vérin 34 agit, au travers de la sellette 28, sur le fond 18 de moule.

De préférence, le guidage des pistons du vérin 34 est avantageusement complété par un ensemble de moyens 82 de guidage, tels que des colonnettes de guidage et bagues de guidage complémentaires.

De préférence, le vérin 34 comporte des moyens 84 de rappel aptes à solliciter automatiquement vers la position finale de boxage lesdits pistons 36, 38 et 44 attelés axialement.

De préférence, lesdits moyens 84 de rappel comportent au moins un organe élastique travaillant en compression qui est logé dans logement 86 réalisé dans au moins l'un des tronçons du pied 54 central.

La présence de l'organe 84 élastique est considérée comme négligeable sur la troisième section active S3.

L'organe 84 élastique comporte une extrémité axiale supérieure qui est en appui contre la surface radiale inférieure du troisième piston 44 formant couvercle alors que l'autre extrémité axiale inférieure est en appui contre le fond du logement 86 réalisé dans le pied 54.

L'organe 84 élastique est donc comprimé lors du rappel, par au moins l'une desdites chambres 78 et 80 de rappel des pistons du vérin 34 de la position finale de boxage vers la position initiale, et ledit organe 84 élastique restitue ensuite l'énergie emmagasinée lors de l'opération de boxage suivante.

Avantageusement, l'effort appliqué par l'organe 84 élastique sur le troisième piston 44 participe donc également de l'effort Fb de boxage appliqué par le vérin 34 au fond 18 de moule pour réaliser le boxage de l'embase du récipient.

Avantageusement, le dispositif 10 comporte des moyens de reprise d'effort aptes à transmettre, aux demi-moules 14, 16 associés audit fond 18 de moule, les efforts mécaniques appliqués aux moyens 32 d'actionnement du fond 18 de moule, en particulier au vérin 34, lors du façonnage du récipient.

En effet, pour réaliser le boxage, le fond 18 de moule doit être libre axialement d'effectuer la course de boxage.

Par comparaison avec un moule conventionnel sans mise en œuvre d'une opération de boxage et il n'y a donc pas de coopération de formes entre des moyens mâle et femelle appartenant respectivement au fond 18 de moule et aux demi-moules 14 et 16.

Grâce à de tels moyens de reprise d'effort, lesdits efforts transmis sont repris par les demi-moules 14 et 16 auxquels ils sont transmis de manière à n'être ainsi pas repris par le vérin 34 formant les moyens de démultiplication des moyens 32 d'actionnement.

Selon un deuxième mode de réalisation représenté à la figure 8, les moyens 100 d'amplification des moyens 34 d'actionnement du fond 18 de moule comportent au moins un levier qui, interposé entre le vérin 34 et le fond 18 de moule, est apte à accroître avec un effet de levier déterminé l'effort de sortie dudit au moins un vérin 34.

Dans ce deuxième mode de réalisation, le vérin 34 est un simple vérin ou en variante, un vérin multiple tel que celui décrit pour le premier mode de réalisation.

Avantageusement, les moyens 100 d'amplification comportent des moyens mécaniques formés par au moins deux bielles, respectivement une première bielle 102 dont une extrémité 104 est liée en un point A d'accrochage à un support 26, 28 du fond 18 de moule et dont l'autre extrémité 106 est reliée à une extrémité 108 d'une deuxième bielle 110 en un point B d'articulation, l'autre extrémité 112 de la deuxième bielle 110 étant liée à un point C d'ancrage fixe.

Lesdits moyens 32 d'actionnement sont aptes à agir sur le point C d'articulation desdites bielles 102 et 110 pour provoquer le déplacement du support 26, 28 de fond 18 de moule suivant la course axiale de boxage en faisant varier la longueur entre le point d'accrochage A de la première bielle 102 et le point C d'accrochage de la deuxième bielle 110.

La figure 8 représente les moyens 100 d'amplification dans une position de retrait correspondant à la position initiale du fond 18 de moule, en position finale de boxage du fond 18 de moule, le vérin 34 applique un effort de sortie sur le point C et les bielles 102, 110 se déplacent de manière que les points A, B et C soient alignés axialement.

## Revendications

1. Dispositif (10) pour réaliser une opération, dite de boxage, d'une embase d'un récipient avec un fond (18) de moule, lors du façonnage du récipient par étirage-soufflage d'une préforme comportant au moins une opération de soufflage par injection à l'intérieur de la préforme d'un fluide jusqu'à une pression de soufflage, ledit fond (18) de moule étant apte à être déplacé sélectivement, entre au moins une position initiale (P0) et une position finale (P1) de boxage déterminant une course axiale (b) de boxage, sous l'action de moyens (32) d'actionnement comportant au moins un vérin qui est destiné à être alimenté en fluide sous pression,
**caractérisé en ce que** les moyens (32) d'actionnement du fond (18) de moule comportent des moyens (34) de démultiplication de l'effort de sortie du vérin qui agit sur le fond (18) de moule pour lui appliquer un effort (Fb) de boxage,
lesdits moyens de démultiplication étant constitués par au moins un vérin (34) multiple, dit à étages, comportant au moins un premier piston (36) et un deuxième piston (38) attelés axialement pour former un équipage mobile et respectivement montés coulissant dans une première chambre (40) d'actionnement et une deuxième chambre (42) d'actionnement, lesdites première et deuxième chambres (40, 42) d'actionnement étant aptes à être alimentées par le même fluide sous pression, grâce à quoi ledit vérin (34) multiple est apte à appliquer au fond (18) de moule un effort (Fb) de boxage associé qui résulte de la somme des sections actives (S1, S2) d'au moins lesdits premier et deuxième pistons (36, 38).

2. Dispositif selon la revendication 1, **caractérisé en ce que** les moyens de démultiplication sont constitués par au moins un vérin (34) multiple à trois étages comportant au moins un troisième piston (44) qui, attelé axialement aux premier et deuxième pistons (36, 38), est monté coulissant dans une troisième chambre (46) d'actionnement apte à être alimentée par le même fluide sous pression, ledit vérin (34) multiple étant apte à appliquer au fond (18) de moule un effort (Fb) de boxage associé qui résulte de la somme des sections actives (S1, S2, S3) desdits au moins premier, deuxième et troisième pistons (36, 38, 44).

3. Dispositif selon l'une des revendications 1 ou 2, **caractérisé en ce que** lesdites chambres (40, 42, 46) d'actionnement sont alimentées en fluide sous pression à une pression (Pn) nominale d'alimentation qui est inférieure à la pression (Ps) de soufflage.

4. Dispositif selon la revendication 3, **caractérisé en ce que** le vérin (34) multiple du dispositif (10) est **caractérisé par** un facteur (k) de démultiplication qui est supérieur ou égal au rapport de la valeur de la pression (Ps) de soufflage sur la valeur de la pression (Pn) nominale d'alimentation.

5. Dispositif selon l'une quelconque des revendications 1 à 4, **caractérisé en ce que** lesdites chambres (40, 42, 46) d'actionnement sont alimentées à ladite pression (Pn) nominale par un circuit d'alimentation délivrant un fluide sous pression qui est constitué, en tout ou partie, d'air de soufflage recyclé.

6. Dispositif selon l'une quelconque des revendications 1 à 5, **caractérisé en ce que** le vérin (34) multiple comporte au moins un étage à double effet comportant une chambre (78, 80) de rappel qui est apte à être alimentée en fluide sous pression.

7. Dispositif selon l'une quelconque des revendications 1 à 6, **caractérisé en ce que** le vérin (34) multiple comporte des moyens (84) de rappel élastique aptes à solliciter automatiquement lesdits pistons vers une position correspondant à la position finale de boxage du fond (18) de moule.

8. Dispositif (10) pour réaliser une opération, dite de boxage, d'une embase d'un récipient avec un fond (18) de moule, lors du façonnage du récipient par étirage-soufflage d'une préforme comportant au moins une opération de soufflage par injection à l'intérieur de la préforme d'un fluide jusqu'à une pression de soufflage, ledit fond (18) de moule étant apte à être déplacé sélectivement, entre au moins une position initiale (P0) et une position finale (P1) de boxage déterminant une course axiale (b) de boxage, sous l'action de moyens (32) d'actionnement comportant au moins un vérin qui est destiné à être alimenté en fluide sous pression,
**caractérisé en ce que** les moyens (32) d'actionnement du fond (18) de moule comportent des moyens (100) d'amplification de l'effort de sortie du vérin qui agit sur le fond (18) de moule pour lui appliquer un effort (Fb) de boxage,
lesdits moyens (100) d'amplification des moyens (32) d'actionnement du fond (18) de moule comportant au moins un levier qui, interposé entre le vérin (34) et le fond (18) de moule, est apte à accroître avec un effet de levier déterminé l'effort de sortie dudit au moins un vérin,
lesdits moyens (100) d'amplification comportant des moyens mécaniques formés par au moins deux bielles, respectivement une première bielle (102) dont une extrémité est liée en un point (A) d'accrochage à un support (26, 28) du fond (18) de moule et dont l'autre extrémité est reliée à une extrémité d'une deuxième bielle (110) en un point (B) d'articulation, l'autre extrémité de la deuxième bielle (110) étant liée à un point (C) d'ancrage fixe, et **en ce que** lesdits moyens (32) d'actionnement sont aptes à agir sur le point (B) d'articulation desdites bielles (102, 110) pour provoquer le déplacement du support (26, 28) de fond de moule suivant la course axiale de boxage en faisant varier la longueur entre le point (A) d'accrochage de la première bielle (102) et le point (C) d'accrochage de la deuxième bielle (110).

9. Dispositif selon l'une quelconque des revendications précédentes, **caractérisé en ce que** le dispositif (10) comporte des moyens de renvoi aptes à transmettre, aux demi-moules (14, 16) associés audit fond (18) de moule, les efforts mécaniques appliqués aux moyens (32) d'actionnement du fond (18) de moule lors du façonnage du récipient.

10. Dispositif selon l'une quelconque des revendications précédentes, **caractérisé en ce que** les moyens (32) d'actionnement comportant le vérin (34) sont agencés axialement en dessous d'un support (26) du fond (18) de moule comportant au moins une sellette (28).

## Patentansprüche

1. Vorrichtung (10) zum Durchführen eines sogenannten Stauchvorgangs eines Unterteils eines Behälters mit einem Formboden (18) während des Formens des Behälters durch Streckblasen eines Vorformlings, umfassend mindestens einen Blasvorgang durch Einpressen eines Fluids in das Innere des Vorformlings bis auf einen Blasdruck, wobei der Formboden (18) fähig ist, unter der Einwirkung von Betätigungsmitteln (32), die mindestens einen Zylinder, der dazu bestimmt ist, mit Druckfluid beaufschlagt zu werden, umfassen, zwischen mindestens einer Ausgangsposition (P0) und einer finalen Stauchposition (P1), die einen axialen Stauchhub (b) bestimmen, selektiv verschoben zu werden,
**dadurch gekennzeichnet, dass** die Betätigungsmittel (32) des Formbodens (18) Mittel (34) zum Übersetzen der Ausgangskraft des Zylinders, der auf den Formboden (18) wirkt, um eine Stauchkraft (Fb) auf diesen auszuüben, umfassen,
wobei die Übersetzungsmittel aus mindestens einem Mehrfachzylinder (34), der als mehrstufig bezeichnet wird, bestehen, umfassend mindestens einen ersten Kolben (36) und einen zweiten Kolben (38), die axial gekuppelt sind, um eine bewegliche Einrichtung zu bilden, und jeweils in einer ersten Betätigungskammer (40) und einer zweiten Betätigungskammer (42) gleitbar gelagert sind, wobei die erste und die zweite Betätigungskammer (40, 42) mit demselben Druckfluid beaufschlagt werden können, sodass der Mehrfachzylinder (34) fähig ist, auf den Formboden (18) eine entsprechende Stauchkraft (Fb) auszuüben, die sich aus der Summe der aktiven Querschnitte (S1, S2) mindestens des ersten und des zweiten Kolbens (36, 38) ergibt.

2. Vorrichtung nach Anspruch 1, **dadurch gekennzeichnet, dass** die Übersetzungsmittel aus mindestens einem Mehrfachzylinder (34) mit drei Stufen bestehen, umfassend mindestens einen dritten Kolben (44), der axial mit dem ersten und zweiten Kolben (36, 38) gekuppelt ist und gleitbar in einer dritten Betätigungskammer (46) gelagert ist und mit demselben Druckfluid beaufschlagt werden kann, wobei der Mehrfachzylinder (34) fähig ist, auf den Formboden (18) eine entsprechende Stauchkraft (Fb) auszuüben, die sich aus der Summe der aktiven Querschnitte (S1, S2, S3) des mindestens ersten, zweiten und dritten Kolbens (36, 38, 44) ergibt.

3. Vorrichtung nach einem der Ansprüche 1 oder 2, **dadurch gekennzeichnet, dass** die Betätigungskammern (40, 42, 46) mit Druckfluid mit einem Nennbeaufschlagungsdruck (Pn), der kleiner als der Blasdruck (Ps) ist, beaufschlagt werden.

4. Vorrichtung nach Anspruch 3, **dadurch gekennzeichnet, dass** der Mehrfachzylinder (34) der Vorrichtung (10) durch einen Übersetzungsfaktor (k) gekennzeichnet ist, der größer als oder gleich dem Verhältnis zwischen dem Wert des Blasdrucks (Ps) und dem Wert des Nennbeaufschlagungsdrucks (Pn) ist.

5. Vorrichtung nach einem der Ansprüche 1 bis 4, **dadurch gekennzeichnet, dass** die Betätigungskammern (40, 42, 46) durch einen Beaufschlagungskreis mit dem Nenndruck (Pn) beaufschlagt werden, der ein Druckfluid liefert, das ganz oder teilweise aus wiederverwendeter Blasluft besteht.

6. Vorrichtung nach einem der Ansprüche 1 bis 5, **dadurch gekennzeichnet, dass** der Mehrfachzylinder (34) mindestens eine doppelt wirkende Stufe umfasst, die eine Rückstellkammer (78, 80) umfasst, die fähig ist, mit Druckfluid beaufschlagt zu werden.

7. Vorrichtung nach einem der Ansprüche 1 bis 6, **dadurch gekennzeichnet, dass** der Mehrfachzylinder (34) elastische Rückstellmittel (84) umfasst, die fähig sind, die Kolben automatisch in eine Position, die der finalen Stauchposition des Formbodens (18) entspricht, zu bewegen.

8. Vorrichtung (10) zum Durchführen eines sogenannten Stauchvorgangs eines Unterteils eines Behälters mit einem Formboden (18) während des Formens des Behälters durch Streckblasen eines Vorformlings, umfassend mindestens einen Blasvorgang durch Einpressen eines Fluids in das Innere des Vorformlings bis auf einen Blasdruck, wobei der Formboden (18) fähig ist, unter der Einwirkung von Betätigungsmitteln (32), die mindestens einen Zylinder, der dazu bestimmt ist, mit Druckfluid beaufschlagt zu werden, umfassen, zwischen mindestens einer Ausgangsposition (P0) und einer finalen Stauchposition (P1), die einen axialen Stauchhub (b) bestimmen, selektiv verschoben zu werden,
**dadurch gekennzeichnet, dass** die Betätigungsmittel (32) des Formbodens (18) Mittel (100) zum Verstärken der Ausgangskraft des Zylinders, der auf den Formboden (18) wirkt, um eine Stauchkraft (Fb) auf diesen auszuüben, umfassen,
wobei die Verstärkungsmittel (100) der Betätigungsmittel (32) des Formbodens (18) mindestens einen Hebel umfassen, der, zwischen dem Zylinder (34) und dem Formboden (18) eingefügt, fähig ist, die Ausgangskraft des mindestens einen Zylinders mit einer bestimmten Hebelkraft zu erhöhen,
wobei die Verstärkungsmittel (100) mechanische Mittel umfassen, die durch mindestens zwei Lenkstangen gebildet werden, und zwar eine erste Lenkstange (102), deren eines Ende an einem Anschlagpunkt (A) mit einer Stütze (26, 28) des Formbodens (18) verbunden ist und deren anderes Ende an einem Gelenkpunkt (B) mit einem Ende einer zweiten Lenkstange (110) verbunden ist, wobei das andere Ende der zweiten Lenkstange (110) mit einem festen Ankerpunkt (C) verbunden ist, und dadurch, dass die Betätigungsmittel (32) fähig sind, auf den Gelenkpunkt (B) der Lenkstangen (102, 110) zu wirken, um die Verschiebung der Stütze (26, 28) des Formbodens gemäß dem axialen Stauchhub zu bewirken, indem sie die Länge zwischen dem Anschlagpunkt (A) der ersten Lenkstange (102) und dem Anschlagpunkt (C) der zweiten Lenkstange (110) variieren.

9. Vorrichtung nach einem der vorhergehenden Ansprüche, **dadurch gekennzeichnet, dass** die Vorrichtung (10) Umlenkmittel umfasst, die fähig sind, die mechanischen Kräfte, die während des Formens des Behälters auf die Betätigungsmittel (32) des Formbodens (18) ausgeübt werden, auf die mit dem Formboden (18) assoziierten Formhälften (14, 16) zu übertragen.

10. Vorrichtung nach einem der vorhergehenden Ansprüche, **dadurch gekennzeichnet, dass** die Betätigungsmittel (32), die den Zylinder (34) umfassen, axial unterhalb einer Stütze (26) des Formbodens (18), die mindestens ein Schnittstellenelement (28) umfasst, angeordnet sind.

## Claims

1. Device (10) for performing an operation, referred to as boxing, on a base of a container with a mould bottom (18), during the fashioning of the container by stretch-blow-moulding of a preform involving at least one operation of blow-moulding by injecting a fluid into the preform up to a blow-moulding pressure, said mould bottom (18) being able to be moved selectively, between at least one initial position (P0) and a final boxing position (P1) determining an axial boxing travel (b), under the action of actuation means (32) comprising at least one cylinder that is intended to be supplied with pressurized fluid,
**characterized in that** the actuation means (32) for the mould bottom (18) have means (34) for reducing the output force of the cylinder that acts on the mould bottom (18) so as to apply a boxing force (Fb) thereto,
said reduction means being formed by at least one multi-stage cylinder (34), referred to as a staged cylinder, having at least one first piston (36) and one second piston (38) that are axially coupled so as to form a mobile assembly and mounted so as to slide in a first actuation chamber (40) and a second actuation chamber (42), respectively, said first and second actuation chambers (40, 42) being able to be supplied with the same pressurized fluid, by virtue of which said multi-stage cylinder (34) is able to apply to the mould bottom (18) an associated boxing force (Fb) that results from the sum of the active sections (S1, S2) of at least said first and second pistons (36, 38).

2. Device according to Claim 1, **characterized in that** the reduction means are formed by at least one multi-stage cylinder (34) with three stages having at least one third piston (44) that, axially coupled to the first and second pistons (36, 38), is mounted so as to slide in a third actuation chamber (46) that is able to be supplied with the same pressurized fluid, said multi-stage cylinder (34) being able to apply to the mould bottom (18) an associated boxing force (Fb) that results from the sum of the active sections (S1, S2, S3) of said at least first, second and third pistons (36, 38, 44).

3. Device according to either of Claims 1 and 2, **characterized in that** said actuation chambers (40, 42, 46) are supplied with pressurized fluid at a nominal supply pressure (Pn) that is lower than the blow-moulding pressure (Ps).

4. Device according to Claim 3, **characterized in that** the multi-stage cylinder (34) of the device (10) is **characterized by** a reduction factor (k) that is greater than or equal to the ratio of the value of the blow-moulding pressure (Ps) to the value of the nominal supply pressure (Pn).

5. Device according to any one of Claims 1 to 4, **characterized in that** said actuation chambers (40, 42, 46) are supplied at said nominal pressure (Pn) by a supply circuit delivering a pressurized fluid that is completely or partially made up of recycled blow-moulding air.

6. Device according to any one of Claims 1 to 5, **characterized in that** the multi-stage cylinder (34) has at least one double-acting stage having a return chamber (78, 80) that is able to be supplied with pressurized fluid.

7. Device according to any one of Claims 1 to 6, **characterized in that** the multi-stage cylinder (34) has elastic return means (84) that are able to automatically urge said pistons towards a position corresponding to the final boxing position of the mould bottom (18).

8. Device (10) for performing an operation, referred to as boxing, on a base of a container with a mould bottom (18), during the fashioning of the container by stretch-blow-moulding of a preform involving at least one operation of blow-moulding by injecting a fluid into the preform up to a blow-moulding pressure, said mould bottom (18) being able to be moved selectively, between at least one initial position (P0) and a final boxing position (P1) determining an axial boxing travel (b), under the action of actuation means (32) comprising at least one cylinder that is intended to be supplied with pressurized fluid,
**characterized in that** the actuation means (32) for the mould bottom (18) have means (100) for amplifying the output force of the cylinder that acts on the mould bottom (18) so as to apply a boxing force (Fb) thereto,
said amplification means (100) of the actuation means (32) for the mould bottom (18) having at least one lever that, interposed between the cylinder (34) and the mould bottom (18), is able to increase the output force of said at least one cylinder with a determined lever effect,
said amplification means (100) having mechanical means formed by at least two rods, respectively a first rod (102), one end of which is connected at an attachment point (A) to a support (26, 28) of the mould bottom (18) and the other end of which is connected to one end of a second rod (110) at an articulation point (B), the other end of the second rod (110) being connected to a fixed anchoring point (C), and **in that** said actuation means (32) are able to act on the articulation point (B) of said rods (102, 110) so as to cause the movement of the mould bottom support (26, 28) along the axial boxing travel by varying the length between the attachment point (A) of the first rod (102) and the attachment point (C) of the second rod (110).

9. Device according to any one of the preceding claims, **characterized in that** the device (10) has transmission means that are able to transmit, to the half-moulds (14, 16) associated with said mould bottom (18), the mechanical forces applied to the actuation means (32) for the mould bottom (18) during the fashioning of the container.

10. Device according to any one of the preceding claims, **characterized in that** the actuation means (32) having the cylinder (34) are arranged axially beneath a support (26) of the mould bottom (18) having at least one support ring (28) .
